# EUROPEAN PATENT SPECIFICATION

(11) **EP 1 551 083 B1**
(45) Date of publication and mention of the grant of the patent: **12.10.2011**
(21) Application number: 04028365.7
(22) Date of filing: 30.11.2004
(51) Int. Cl.: H01B 7/18, H02G 15/007, H01R 13/58

(54) **Locking device**
Befestigungseinrichtung
Dispositif de blocage

(30) Priority: 31.12.2003 IT FI20030329
(43) Date of publication of application: 06.07.2005
(73) Proprietor: VERDA s.r.l., 50141 Firenze (IT)
(72) Inventor: Pini, Belisario, 50141 Firenze (IT)
(74) Representative: Strasser, Wolfgang

(56) References cited:
- US-A- 5 345 656
- US-A- 5 903 959
- US-A1- 2001 017 218

## Description

The present invention relates to a locking device, especially, even if not exclusively, for electric cables provided with a textile resisting core, i.e. a core made up of a plurality of resisting non-conductive threads.

Prior art US-A1-5345656 discloses a locking device according to the preamble of claim 1.

The main aim of the present invention is to propose a device allowing a simple, quick and safe locking of electric cables of the above-mentioned type.

This result has been achieved, according to the invention, by adopting the idea of making a device having the features as indicated in claim 1, further characteristics being set forth in the dependent claims.

The present device avoids the elongation of the core threads even if the cable is subject to a high tensile stress and it is safe, simple to be made, cheap and reliable even after a long operation time. Furthermore, the present device is easy to use and it doesn't require any special training.

These and other advantages and characteristics of the invention will be best understood by anyone skilled in the art from a reading of the following description in conjunction with the attached drawings given as a practical exemplification of the invention, but not to be considered in a limitative sense, wherein:
- Fig.1 is a schematic perspective view of a device according to the present invention;
- Fig.2 is a cross section view of the device shown in Fig.1, wherein the electric cable is not illustrated;
- Fig.3 is a perspective view of the first element of the device shown in Figs. 1 and 2;
- Fig.4 is a further vertical section view of the device shown in Figs. 1 and 2;
- Fig.5 is a perspective view of the assembly shown in Figs. 1 and 2, wherein the electric cable is not illustrated and the first element (1) is partially sectioned to make the second element (4) better visible;
- Figs. 6 and 7 are two perspective views of the second element.

Reduced to its basic structure and referring to the enclosed drawings, a device according to the present invention comprises:
- a first element (1) which is provided with a central longitudinal opening (10) to allow the passage of an electric cable (2) of the type provided with a core made up of a plurality of resisting non-conductive threads (3);
- a second element (4), apt to be positioned within a corresponding seat (14) of the first element (1) so as said cable (2) passes centrally through the latter, and provided with two inner lateral surfaces (40) apt to delimit, in cooperation with the inner surface of said seat (14), a labyrinth passage for the resisting threads (3) of the cable (2): said seat (14) being a part of the opening (10) which allows the cable (2) to pass through the first element (1).

Said first element (1) is provided, opposite to said seat (14), with a tubular tang shaped appendix (100) which, in turn, is provided with two radial appendixes (101) united to the same appendix only in correspondence of their respective bases, being surrounded by a reverse "U"-shaped cut (102).

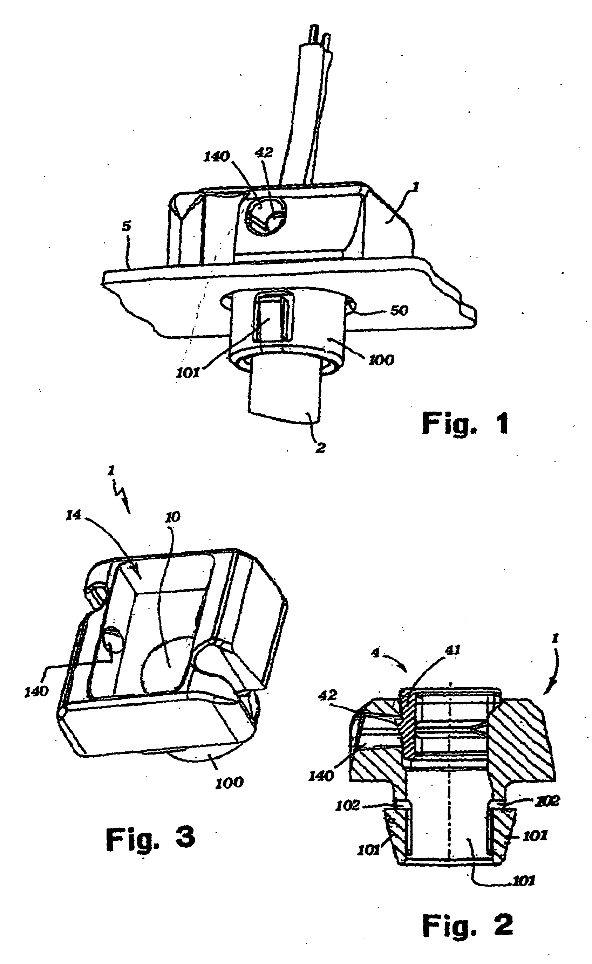

In this way, said appendixes (102) are allowed to elastically bend towards the inside of the appendix (100). This is particularly useful when the device is connected with a support body (5) featuring an opening (50) through which the appendix (100) of the first element (1) may be positioned, so that the appendix (100) and the said seat (14) result on opposite sides with respect to the same support (5) as shown in Fig.1, Fig.4 and Fig.5.

The opening for the passage of the cable (2) through the first element (1) is entirely within the appendix (100) and the seat (14) of the first element.

Said first element (1) is provided, in correspondence of said seat (14), with an opening (140) whose axis is substantially orthogonal to the opening for the cable (2); said second element (4) is provided, behind the bottom wall (41) from which said surfaces (40) emerge, with a teeth (42) destined to engage the cross opening (140) of the seat (14) when the first and the second element are assembled to lock the threads (3), so as to realize an irreversible connection of the second element with the first.

Said surfaces (40), between which the cable (2) is destined to pass, are united, on one side, with the wall (41) from which they emerge and, on the opposite side, with two external wings (44) of the same second element (4), so that, when seen in plant view, the second element (4) has a continuous shape with a central "C" shaped portion and two "C" side portions which are on opposite sides with respect to the central portion and 180° turned with respect to the latter.

Said surfaces (40) are substantially parallel to the external wings (44).

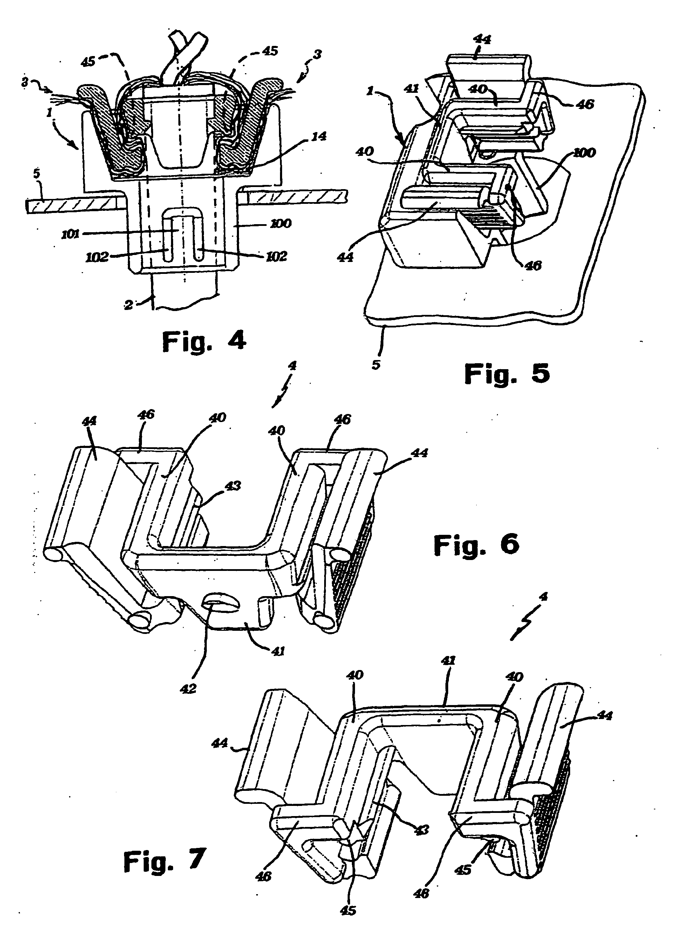

According to the example shown in Figs. 5, 6 and 7, said inner surfaces (40) are united with the external wings (44) by two corresponding connecting segments or portions (46) which are made up of the same molding material of which the second element (4) is made: said connecting portions (46) being substantially orthogonal to each surface (40) and to the respective external wing (44). Said connecting portions or segments (46) are on a same side, i.e. they are substantially coplanar, and are at a preset distance from said wall (41), since between each of them and the wall (41) there is a corresponding surface (40).

Each of said surfaces (40), the corresponding external wing and the respective connecting portion (46) cooperate to delimit an opening, which is open upwardly, downwardly and in front of the connecting portion (46), for the threads (3) to be locked.

Furthermore, a teeth (43) is advantageously provided in correspondence of each side surface (40) of said second element (4), that is, in correspondence of the wall facing the cable (2). When the device is in operation, as in Fig.1 and Fig.4, the two tooth (43) of the second element (4) clamp the cable (2) which passes between the surfaces (40) from which the tooth (43) emerge.

Furthermore, said surfaces (40) may be provided with respective external tooth (45), each of said tooth facing a respective external wing (44).

The device is assembled as follows.

The cable (2) is made to pass through the appendix (100), the seat (14) of the first element (1) and the gap between the surfaces (40) of the second element (4). Then, the resisting non-conductive threads (3) Are manually disposed to form two side bundles. Subsequently, each bundle of threads (3) is positioned between a corresponding surface (40) and the respective external wing (44) of the second element (4) and then positioned close to the external side of the same wing, as shown in Fig.4. Finally, with one hand the first element (1) is pushed towards the second element (4), and with the other hand the cable (2) is pulled in the opposite direction. Therefore, the non-conductive threads (3) are locked within the labyrinth delimited by the first and the second element (1, 4), the second element resulting positioned within the seat (14) provided by the first element. The cable (2) is clamped by the tooth (43) of the second element (4).

The device described above may be equally advantageously used also to lock the end strands of ropes or cords.

## Claims

1. Device for locking a plurality of threads (3), comprising a first and a second element (4) each of which is provided with a central opening, said first and second element cooperating to delimit a labyrinth passage for the threads (3) to be locked, **characterized in that** said second element (4) is provided with two surfaces (40) which are on opposite sides with respect to the respective central opening and is provided with two external wings (44) which are united to said surface (40): said surfaces (40) being united, on one side, with a bottom wall (41) of the same second element from which they emerge, and, on the opposite side, with a corresponding external wing (44) of the second element (4), when seen in plant view, the second element (4) having a continuous shape with a central "C" shaped portion and two "C" shaped side portions which are on opposite sides with respect to the central portion and 180° turned with respect to the latter, said surfaces (40) being united to said wings (44) by two corresponding connecting portions (46), each of said surfaces (40), the corresponding external wing and the respective connecting portion (46) cooperating to delimit an opening, which is open upwardly, downwardly and in front of the connecting portion (46), for the threads (3) to be locked.

2. Device according to claim 1 **characterized in that** said surfaces (40) are provided with respective external tooth (45) each of which faces a corresponding external wing (44) of said second element (4).

3. Device according to claim 1 **characterized in that** said surfaces (40) of the second element (4) are provided with respective inner tooth (43).

4. Device according to claim 1 **characterized in that** said threads (3) are resisting non-conductive threads of an electric cable (2).

5. Device according to claim 1 **characterized in that** said threads (3) are threads or strands of a rope or cord.

6. Device according to one or more of the preceding claims **characterized in that** said first and second element (1, 4) are provided with means (140, 42) for their reciprocal irreversible hooking.

7. Device according to claim 1 **characterized in that** each of said surfaces (40) and the respective external wing (44) of the second element (4) are united by a connecting portion made up of the same molding material of which the second element (4) is made.

8. Device according to claims 1 and 7 **characterized in that** said connecting portions (46) are substantially coplanar and are at a preset distance from said bottom wall (41).

## Patentansprüche

1. Vorrichtung zum Festlegen einer Vielzahl von Fäden (3), die ein erstes und ein zweites Element (4) umfasst, von denen jedes eine zentrale Öffnung aufweist, wobei das erste und das zweite Element zusammenwirken, um einen labyrinthartigen Durchgang für die festzulegenden Fäden (3) zu bilden, **dadurch gekennzeichnet, dass** das zweite Element (4) zwei Oberflächen (40) aufweist, die sich bezüglich der betreffenden zentralen Öffnung auf gegenüberliegenden Seiten befinden, und dass es zwei äußere Flügel (44) aufweist, die mit den Oberflächen (40) verbunden sind, wobei diese Oberflächen (40) auf der einen Seite mit einer Bodenwand (41) des betreffenden zweiten Elements, von der sie ausgehen, und auf der anderen Seite mit einen entsprechenden äußeren Flügel (44) des zweiten Elements (4) verbunden sind, wobei in Draufsicht das zweite Element (4) eine kontinuierliche Form mit einem zentralen C-förmigen Teil und zwei C-förmigen Seitenteilen aufweist, die sich bezüglich des zentralen Teils auf gegenüberliegenden Seiten befinden und ihm gegenüber um 180° verdreht sind, wobei die Oberflächen (40) mit den Flügeln (44) durch zwei entsprechende Verbindungsteile (46) verbunden sind, wobei jede der Oberflächen (40), der entsprechende externe Flügel und der zugehörige Verbindungsteil (46) zusammenwirken, um eine Öffnung zu umgrenzen, die nach oben, nach unten und auf der Vorderseite des Verbindungsteils (46) für die festzulegenden Fäden (3) offen ist.

2. Vorrichtung nach Anspruch 1, **dadurch gekennzeichnet, dass** jede der Oberflächen (40) mit einem entsprechenden äußeren Zahn (45) versehen ist, von denen jeder einem entsprechenden äußeren Flügel (44) des zweiten Elementes (4) gegenüberliegt.

3. Vorrichtung nach Anspruch 1, **dadurch gekennzeichnet, dass** jede der Oberflächen (40) des zweiten Elements (4) mit einem inneren Zahn (43) versehen ist.

4. Vorrichtung nach Anspruch 1, **dadurch gekennzeichnet, dass** die Fäden (3) widerstandsfähige, nicht leitende Fäden eines elektrischen Kabels (2) sind.

5. Vorrichtung nach Anspruch 1, **dadurch gekennzeichnet, dass** es sich bei den Fäden (3) um Fäden oder Stränge eines Seils oder einer Schnur handelt.

6. Vorrichtung nach einem oder mehreren der vorhergehenden Ansprüche, **dadurch gekennzeichnet, dass** das erste und das zweite Element (1, 4) mit Einrichtungen (140, 42) versehen sind, die dazu dienen, sie in irreversibler Weise aneinander zu verhaken.

7. Vorrichtung nach Anspruch 1, **dadurch gekennzeichnet, dass** jede der Oberflächen (40) und der zugehörige äußere Flügel (44) des zweiten Elementes (4) durch einen Verbindungsteil miteinander verbunden sind, der aus dem gleichen Gussmaterial besteht, aus dem das zweite Element (4) hergestellt ist.

8. Vorrichtung nach Anspruch 1 und 7, **dadurch gekennzeichnet, dass** die Verbindungsteile (46) im Wesentlichen koplanar verlaufen und sich von der Bodenwand (41) in einem vorgegebenen Abstand befinden.

## Revendications

1. Dispositif pour le blocage d'une pluralité de fils (3) comprenant un premier et un deuxième élément (1,4) chacun des quels présente un passage central, ledit premier et deuxième élément coopèrent pour délimiter un passage en forme de labyrinthe pour les fils (3) à bloquer, **caractérisé en ce que** ledit deuxième élément (4) est pourvu de deux surface (40) de côtés opposés par rapport au passage centrale correspondant et présente deux ailes (44) externes unies auxdites surfaces (40): lesdites surfaces (40) en étant unies, sur un côté, à une paroi de fond (41) du même deuxième élément par laquelle elle émergent, et, du côté opposé, en étant unie à une aile externe correspondante (44) du deuxième élément (4), vu en plan, le deuxième élément (4) en étant en forme continue avec une portion centrale en forme de « C » et deux portions latérales en forme de « C » qui se trouvent de côtés opposés par rapport à la portion centrale et tournées de 180° par rapport à cette dernière, lesdites surfaces (40) en étant unies auxdites ailes (44) par deux correspondants portions de reliement (46), chacune desdites surfaces (40), l'aile correspondante externe et le portion respective de reliement (46) en coopérant pour délimiter une ouverture, ouverte en haut, en bas et en face à la portion de reliement (46), pour le fils (3) à bloquer.

2. Dispositif selon la revendication 1 **caractérisé en ce que** lesdites surfaces (40) sont pourvues de dents respectifs (45) externes, chacun desquels est tourné vers une aile externe correspondante (44) dudit deuxième élément (4).

3. Dispositif selon la revendication 1 **caractérisé en ce que** lesdites surfaces (40) du deuxième élément (4) sont pourvue de dents internes respectifs (4).

4. Dispositif selon la revendication 1 **caractérisé** un ce que lesdits fils (3) sont fils résistants non conducteurs d'un câble électrique (2).

5. Dispositif selon la revendication 1 **caractérisé en ce que** lesdits fils (3) sont brins d'une corde ou câble.

6. Dispositif selon une ou plusieurs des revendications précédentes **caractérisé en ce que** lesdits premier et deuxième élément (1,4) sont pourvus de moyens d'encliquetage réciproque irréversible (140,42).

7. Dispositif selon la revendication 1 **caractérisé en ce que** chacune desdites surface (40) et l'aile externe respective (44) du deuxième élément (4) sont unies par un portion de reliement du même matériel de moulage dont il est fait le deuxième élément (4).

8. Dispositif selon les revendications 1 et 7 **caractérisé en ce que** lesdites portions de reliement (46) sont essentiellement coplanaires et espacées par ladite paroi du fond (41).
